(19) Europäisches Patentamt / European Patent Office / Office européen des brevets

(11) **EP 4 583 125 A1**

(12) **EUROPEAN PATENT APPLICATION**
published in accordance with Art. 153(4) EPC

(43) Date of publication:
**09.07.2025 Bulletin 2025/28**

(21) Application number: **23859960.9**

(22) Date of filing: **02.08.2023**

(51) International Patent Classification (IPC):
*H01B 7/02* (2006.01)   *H01B 7/18* (2006.01)
*H01B 13/16* (2006.01)   *H01B 13/24* (2006.01)
*H01F 5/06* (2006.01)

(52) Cooperative Patent Classification (CPC):
**H01B 7/02; H01B 7/18; H01B 13/00; H01B 13/14;
H01B 13/16; H01B 13/24; H01F 5/06**

(86) International application number:
**PCT/JP2023/028332**

(87) International publication number:
**WO 2024/048191 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.08.2022 JP 2022136034**

(71) Applicant: DAIKIN INDUSTRIES, LTD.
**Osaka-shi, Osaka 530-0001 (JP)**

(72) Inventors:
• **NAKATANI, Yasukazu**
  **Osaka-Shi, Osaka 530-0001 (JP)**
• **KONO, Hideki**
  **Osaka-Shi, Osaka 530-0001 (JP)**
• **OGITA, Koichiro**
  **Osaka-Shi, Osaka 530-0001 (JP)**
• **SUKEGAWA, Masamichi**
  **Osaka-Shi, Osaka 530-0001 (JP)**

(74) Representative: **Hoffmann Eitle
Patent- und Rechtsanwälte PartmbB
Arabellastraße 30
81925 München (DE)**

(54) **COVERED WIRE AND METHOD FOR PRODUCING COVERED WIRE**

(57)    Provided is a coated electric wire including a flat electric wire substrate and a coating layer formed on the outer periphery of the flat electric wire substrate, wherein the coating layer includes: a first layer formed of a liquid coating material composition (1) containing a polymer compound (1) having any one or both of an amide group and an imide group; a second layer formed of a liquid coating material composition (2) containing a polymer compound (2) having any one or both of an amide group and an imide group, and a fluorine-containing polymer compound (2), or of a powder coating material composition (2) containing a polymer compound (2) having any one or both of an amide group and an imide group, and a fluorine-containing polymer compound (2); and a third layer formed by extrusion of a fluorine-containing polymer compound (3).

**EP 4 583 125 A1**

**Description**

TECHNICAL FIELD

The present disclosure relates to a coated electric wire and a method for producing a coated electric wire.

BACKGROUND ART

Patent Document 1 describes an electric wire having a conductor and a first insulating layer formed on the outer periphery of the conductor, wherein the first insulating layer includes a thermosetting resin and a fluororesin, with a mass ratio between the thermosetting resin and the fluororesin of 90:10 to 10:90, and the layer is formed by mixing a thermosetting resin solution with a fluororesin organosol, applying the resulting mixture on the conductor, and baking the applied mixture.

RELATED ART

PATENT DOCUMENT

Patent Document 1: International Publication No. 2011/024809

SUMMARY OF THE INVENTION

PROBLEM TO BE SOLVED BY THE INVENTION

An object of the present disclosure is to provide a coated electric wire having a low relative dielectric constant and a high partial discharge inception voltage, with rare occurrence of wrinkles on the coating layer even when bent, and having a high adhesin strength between the flat electric wire substrate and the coating layer.

MEANS FOR SOLVING THE PROBLEM

According to the present disclosure, provided is a coated electric wire including a flat electric wire substrate and a coating layer formed on the outer periphery of the flat electric wire substrate, wherein the coating layer includes a first layer formed of a liquid coating material composition (1) containing a polymer compound (1) having any one or both of an amide group and an imide group, a second layer formed of a liquid coating material composition (2) containing a polymer compound (2) having any one or both of an amide group and an imide group, and a fluorine-containing polymer compound (2), or of a powder coating material composition (2) containing a polymer compound (2) having any one or both of an amide group and an imide group, and a fluorine-containing polymer compound (2), and a third layer formed by extrusion of a fluorine-containing polymer compound (3).

EFFECTS OF INVENTION

According to the present disclosure, a coated electric wire having a low relative dielectric constant and a high partial discharge inception voltage, with rare occurrence of wrinkles on the coating layer even when bent, and having a high adhesin strength between the flat electric wire substrate and the coating layer, can be provided.

DESCRIPTION OF EMBODIMENTS

A specific embodiment of the present disclosure is described in detail as follows, though the present disclosure is not limited to the following embodiment.
The coated electric wire of the present disclosure incudes a flat electric wire substrate and a coating layer formed on the outer periphery of the flat electric wire substrate.
Since a fluorine-containing polymer compound has non-stickiness, in the case where a coating layer containing a fluorine-containing polymer compound is disposed on a flat electric wire substrate of a coated electric wire, a problem is that the adhesion strength between the flat electric wire substrate and the coating layer is insufficient. Accordingly, when a conventional coated electric wire is curved or bent, problems such as floating of the coating layer from the flat electric wire substrate and occurrence of wrinkles on the coating layer occur.
On the other hand, a coating layer formed of material that easily comes into close contact with a flat electric wire substrate has a problem of difficulty in obtaining a coated electric wire excellent in electric performance, due to an increased relative dielectric constant of the coating layer of the coated electric wire, or a decreased partial discharge inception voltage of the coated electric wire.

The coated electric wire of the present disclosure includes an appropriate combination of the constitutional material and forming method of three layers. Accordingly, the coated electric wire of the present disclosure has a low relative dielectric constant and a high partial discharge inception voltage, with rare occurrence of wrinkles on the coating layer even when bent, and has a high adhesin strength between the flat electric wire substrate and the coating layer.

(Flat electric wire substrate)

The shape of the flat electric wire substrate is not limited as long as the cross section thereof has an approximately rectangular flat wire shape. The corner of the cross section of the flat electric wire substrate may have a right angle or may be rounded. As long as the whole cross section of the flat electric wire substrate has an approximately rectangular shape, the flat electric wire substrate may be a single wire, an assembled wire or a stranded wire, and a single wire is preferred.

The flat electric wire substrate is not limited as long as it is composed of a conductive material, and may be composed of a material such as copper, copper alloy, aluminum, aluminum alloy, iron, silver and nickel. One composed of copper, copper alloy, aluminum or aluminum alloy is preferred. Alternatively, a flat electric wire substrate plated with silver or nickel may be used. As the copper, an oxygen-free copper, low-oxygen copper, or copper alloy may be used.

The width of the cross section of the flat electric wire substrate may be 1 to 75 mm, and the thickness of the cross section of the flat electric wire substrate may be 0.1 to 30 mm. The outer peripheral diameter of the flat electric wire substrate may be 6.5 mm or more and 200 mm or less. The ratio of the width to the thickness may be more than 1 and 30 or less.

The surface roughness Sz of the flat electric wire substrate is preferably 0.2 to 12 $\mu$m, more preferably 1 $\mu$m or more, still more preferably 5 $\mu$m or more, and more preferably 10 $\mu$m or less, for further stronger adhesion between the flat electric wire substrate and the coating layer.

The surface roughness of the flat electric wire substrate may be adjusted through surface treatment of the flat electric wire substrate by etching, blasting or laser processing. Also, the surface of the flat electric wire substrate may be roughened by surface treatment. The smaller the distance between protruding portions across a concave portion, the better. For example, a distance of 5 $\mu$m or less is preferred. Also, as the roughness, for example, the area of a concave portion is 1 $\mu$m$^2$ or less when protrusion portions on an unprocessed surface are cut. The convex/concave shape may be a crater-type single convex/concave shape, or may be an ant nest-like branch shape.

(Covering layer)

The coated electric wire of the present disclosure includes a coating layer formed on the outer periphery of a flat electric wire substrate, and the coating layer includes a first layer, a second layer and a third layer. In the coated electric wire of the present disclosure, usually the first layer is formed on the outer periphery of the flat electric wire substrate, the second layer is formed on the outer periphery of the first layer, and the third layer is formed on the outer periphery of the second layer.

Any one of the first layer and the second layer is a coating film formed of a coating material composition. The first layer is a coating film formed of a liquid coating material composition (1). The second layer is a coating film formed of a liquid coating material composition (2) or powder coating material composition (2).

The liquid coating material composition contains a solvent together with a polymer compound or a fluorine-containing polymer compound. The powder coating material composition contains a powder of polymer compound or fluorine-containing polymer compound. In the present disclosure, in the case where the powder coating material contains only a powder of polymer compound or in the case where the powder coating material contains only a powder of fluorine-containing polymer compound, i.e., even in the case where the powder coating material contains no plurality of components, a term "powder coating material composition" is used.

The third layer is an extrudate formed of a composition for extrusion containing a fluorine-containing polymer compound (3), or of a fluorine-containing polymer compound (3) and other components, by extrusion method. The extrudate can be easily formed into a layer having a thickness larger than that of a coating film. For example, the thickness of the extrudate (third layer) may be 90 $\mu$m or more, and the thickness of the coating film (first layer or second layer) may be less than 90 $\mu$m.

The liquid coating material composition (1) includes a polymer compound (1) having any one or both of an amide group and an imide group. The liquid coating material composition (1) is applied to the outer periphery of a flat electric wire substrate to form a first layer, so that a first layer in close contact with the flat electric wire substrate with high adhesion strength can be formed. Thereby, a coating layer in close contact with the flat electric wire substrate with high adhesion strength can be formed, and the coating layer has rare occurrence of wrinkles even when bent.

The liquid coating material composition (2) includes a polymer compound (2) having any one or both of an amide group and an imide group, and a fluorine-containing polymer compound (2). The liquid coating material composition (2) is applied to the outer periphery of the first layer to form the second layer, which has sufficiently close contact with the first layer and the third layer without damaging the low relative dielectric constant and the high partial discharge inception voltage of the coating layer. Thereby, the second layer that makes a coating layer excellent in interlayer strength can be formed.

The powder coating material composition (2) includes a polymer compound (2) having any one or both of an amide group and an imide group, and a fluorine-containing polymer compound (2). The powder coating material composition (2) is applied to the outer periphery of the first layer to form the second layer, which has sufficiently close contact with the first layer and the third layer without damaging the low relative dielectric constant and the high partial discharge inception voltage of the coating layer. Thereby, the second layer that makes a coating layer excellent in interlayer strength can be formed.

The third layer includes a fluorine-containing polymer compound (3). On the outer periphery of the second layer, a third layer is formed of an extrudate of the fluorine-containing polymer compound (3). Thereby, the third layer that imparts the low relative dielectric constant and the high partial discharge inception voltage to the coating layer, and makes the coating layer excellent in interlayer strength resulting from the sufficiently close contact with the second layer, can be formed.

From the viewpoint of insulating properties, the thickness of the coating layer is preferably 30 to 500 $\mu$m, more preferably 60 $\mu$m or more, still more preferably 90 $\mu$m or more, furthermore preferably 120 $\mu$m or more, and more preferably 400 $\mu$m or less, still more preferably 300 $\mu$m or less, furthermore preferably 250 $\mu$m or less. With a too large thickness, in the case where the coated electric wire is used in equipment such as motor, downsizing of the equipment may be difficult, and with a too small thickness, insufficient insulating properties may be obtained.

From the viewpoint of forming a coating layer that allows the flat electric wire substrate to come into sufficiently close contact with the coating layer, with rare occurrence of wrinkles even when bent, the thickness of the first layer is preferably 1 to 50 $\mu$m, more preferably 3 $\mu$m or more, still more preferably 6 $\mu$m or more, and more preferably 40 $\mu$m or less, still more preferably 20 $\mu$m or less, furthermore preferably 10 $\mu$m or less.

From the viewpoint of allowing the second layer to come into sufficiently close contact with the first layer and the third layer without damaging the low relative dielectric constant and the high partial discharge inception voltage of the coating layer, the thickness of the second layer is preferably 5 to 100 $\mu$m, more preferably 10 $\mu$m or more, and more preferably 60 $\mu$m or less, still more preferably 40 $\mu$m or less, furthermore preferably 30 $\mu$m or less.

From the viewpoint of imparting the low relative dielectric constant and the high partial discharge inception voltage to the coating layer, and allowing the third layer to come into sufficiently close contact with the second layer, the thickness of the third layer is preferably 25 to 400 $\mu$m, more preferably 50 $\mu$m or more, still more preferably 75 $\mu$m or more, furthermore preferably 90 $\mu$m or more, and more preferably 300 $\mu$m or less, still more preferably 250 $\mu$m or less.

The relative dielectric constant of the coating layer is preferably 2.1 to 2.8, more preferably 2.6 or less, and still more preferably 2.5 or less. Since the coated electric wire of the present disclosure is formed through an appropriate combination of the constitutional materials and forming method of the three layers, a low relative dielectric constant of the coating layer can be obtained.

The partial discharge inception voltage of the coating layer is preferably 1,000 to 2,100 (Vp), more preferably 1,500 (Vp) or more, still more preferably 1,700 (Vp) or more, and furthermore preferably 1,900 (Vp) or more. Since the coated electric wire of the present disclosure is formed through an appropriate combination of the constitutional materials and forming method of the three layers, a high partial discharge inception voltage of the coating layer can be obtained.

It is preferable that the partial discharge inception voltage of the coating layer satisfy the following relational expression. Since the coated electric wire of the present disclosure is formed through an appropriate combination of the constitutional materials and forming method of the three layers, a high partial discharge inception voltage can be obtained.

$$\text{Partial discharge inception voltage (Vp)} \geq 7.2 \times t + 880$$

(t: thickness of the coating layer ($\mu$m))

Although the coating layer including the first layer, second layer and third layer may further include other layers, a coated electric wire having the desired effects may be obtained without including other layers.

(First layer)

The first layer is formed of a liquid coating material composition (1) including a polymer compound (1) having any one or both of an amide group and an imide group. The liquid coating material composition (1) may be one that includes only the polymer compound (1) having any one or both of an amide group and an imide group, as the polymer compound.

The liquid coating material composition (1) may contain a solvent in addition to the polymer compound (1).

Examples of the solvent include water and an organic solvent, and an organic solvent is preferred. Examples of the organic solvent include N-methyl-2-pyrolidone, N-ethyl-2-pyrolidone, N-butyl-2-pyrolidone, 3-methoxy-N,N-dimethylpropaneamide, N,N-dimethylacetamide, N,N-dimethylformamide, cresol, and methyl isobutyl ketone.

From the viewpoint of easy formation of the layer having a desired thickness, the viscosity of the liquid coating material composition (1) is preferably 10 to 10,000 (cP), more preferably 50 (cP) or more, still more preferably 100 (cP) or more, and more preferably 1,000 (cP) or less, still more preferably 500 (cP) or less. The viscosity of the liquid coating material composition (1) may be adjusted by adjusting the content of the polymer compound (1) in the liquid coating material composition (1).

The content of the polymer compound (1) in the liquid coating material composition (1) relative to the mass of the liquid coating material composition (1) is preferably 1 to 50 wt%, more preferably 10 wt% or more, and more preferably 40 wt% or less.

The liquid coating material composition (1) may include other components on an as needed basis. Examples of the other components include additives such as a cross-linking agent, an antistatic agent, a thermal stabilizer, a foaming agent, a foam nucleating agent, an antioxidant, a surfactant, a photopolymerization initiator, an anti-friction agent, a surface modifier, various organic/inorganic-based pigments, a copper inhibitor, an antifoaming agent, a tackifier, a lubricant, a processing aid, a colorant, a phosphorus-based stabilizer, a lubricant, a mold release agent, a sliding agent, a UV absorption agent, a dye/pigment, a reinforcement material, an anti-drip agent, a filler, a curing agent, a UV curing agent, and a flame retardant. The content of the other components in the liquid coating material composition (1) relative to the mass of the polymer compound (1) in the liquid coating material composition (1) is preferably less than 30 wt%, more preferably less than 10 wt%, and still more preferably 5 wt% or less. The lower limit is not limited, and may be 0 wt% or more. In other words, the liquid coating material composition (1) may contain no other components.

(Second layer)

The second layer is formed of a liquid coating material composition (2) or a powder coating material composition (2).

The liquid coating material composition (2) includes a polymer compound (2) having any one or both of an amide group and an imide group, and a fluorine-containing polymer compound (2). The liquid coating material composition (2) may include only the polymer compound (2) having any one or both of an amide group and an imide group and the fluorine-containing polymer compound (2), as the polymer compounds.

The liquid coating material composition (2) may contain a solvent in addition to the polymer compound (2) and the fluorine-containing polymer compound (2). Examples of the solvent include water and an organic solvent. Examples of the organic solvent include N-methyl-2-pyrolidone, N-ethyl-2-pyrolidone, N-butyl-2-pyrolidone, 3-methoxy-N,N-dimethylpropaneamide, N,N-dimethylacetamide, N,N-dimethylformamide, cresol, and methyl isobutyl ketone.

From the viewpoint of easy formation of the layer having a desired thickness, the viscosity of the liquid coating material composition (2) is preferably 10 to 10,000 (cP), more preferably 50 (cP) or more, still more preferably 100 (cP) or more, and more preferably 1,000 (cP) or less, still more preferably 500 (cP) or less. The viscosity of the liquid coating material composition (2) may be adjusted by adjusting the content of the polymer compound (2) and the fluorine-containing polymer compound (2) in the liquid coating material composition (2).

The content of the polymer compound (2) and the fluorine-containing polymer compound (2) in the liquid coating material composition (2) relative to the mass of the liquid coating material composition (2) is preferably 1 to 90 wt%, more preferably 10 wt% or more, and more preferably 80 wt% or less.

The powder coating material composition (2) includes a polymer compound (2) having any one or both of an amide group and an imide group, and a fluorine-containing polymer compound (2). Both of the polymer compound (2) and the fluorine-containing polymer compound (2) in the powder coating material composition (2) are usually powder. The powder coating material composition (2) may be one including only the polymer compound (2) having any one or both of an amide group and an imide group and the fluorine-containing polymer compound (2), as the polymer compounds.

From the viewpoint of easy formation of the layer having a desired thickness, the average particle size of the powder coating material composition (2) is preferably 1 to 100 ($\mu$m), more preferably 5 $\mu$m or more, still more preferably 10 $\mu$m or more, and more preferably 90 $\mu$m or less, still more preferably 80 $\mu$m or less.

From the viewpoint of allowing the second layer to come into sufficiently close contact with the first layer and the third layer without damaging the low relative dielectric constant and high partial discharge inception voltage of the coating layer, the volume ratio between the polymer compound (2) and the fluorine-containing polymer compound (2) in the liquid coating material composition (2) or the powder coating material composition (2) is preferably 10/90 to 90/10, more preferably 15/85 or more and 85/15 or less.

The liquid coating material composition (2) or the powder coating material composition (2) may include other components on an as needed basis. Examples of the other components include additives such as a cross-linking agent, an antistatic agent, a thermal stabilizer, a foaming agent, a foam nucleating agent, an antioxidant, a surfactant, a photopolymerization initiator, an anti-friction agent, a surface modifier, various organic/inorganic-based pigments, a copper inhibitor, an antifoaming agent, a tackifier, a lubricant, a processing aid, a colorant, a phosphorus-based stabilizer, a lubricant, a mold release agent, a sliding agent, a UV absorption agent, a dye/pigment, a reinforcement material, an anti-drip agent, a filler, a curing agent, a UV curing agent, and a flame retardant. The content of the other components in the liquid coating material composition (2) or the powder coating material composition (2) relative to the mass of the polymer compound (2) and the fluorine-containing polymer compound (2) in the liquid coating material composition (2) or the powder coating material composition (2) is preferably less than 30 wt%, more preferably less than 10 wt%, and still more preferably 5 wt% or less. The lower limit is not limited, and may be 0 wt% or more. In other words, the liquid coating material composition (2) or the powder coating material composition (2) may contain no other components.

(Third layer)

The third layer is formed by extrusion of the fluorine-containing polymer compound (3). The fluorine-containing polymer compound (3) is described in detail as follows.

The third layer may include other components on an as needed basis. Examples of the other components include additives such as a cross-linking agent, an antistatic agent, a thermal stabilizer, a foaming agent, a foam nucleating agent, an antioxidant, a surfactant, a photopolymerization initiator, an anti-friction agent, a surface modifier, various organic/inorganic-based pigments, a copper inhibitor, an antifoaming agent, a tackifier, a lubricant, a processing aid, a colorant, a phosphorus-based stabilizer, a lubricant, a mold release agent, a sliding agent, a UV absorption agent, a dye/pigment, a reinforcement material, an anti-drip agent, a filler, a curing agent, a UV curing agent, and a flame retardant. The content of the other components in the third layer relative to the mass of the fluorine-containing polymer compound (3) in the third layer is preferably less than 30 wt%, more preferably less than 10 wt%, and still more preferably 5 wt% or less. The lower limit is not limited, and may be 0 wt% or more. In other words, the third layer may contain no other components.

(Polymer compound)

Subsequently, the polymer compound for use in the coating layer of the coated electric wire is described. The polymer compound described as follows may be suitably used as the polymer compound (1) to form the first layer and as the polymer compound (2) to form the second layer.

In the present disclosure, a "polymer compound" has any one or both of an amide group and an imide group, and preferably has no fluorine atom. The polymer compound may have an amide group (amide bond) or an imide group (imide bond) in the main chain or side chain of the polymer compound.

From the viewpoint of adhesion to a flat electric wire substrate or adhesion to another layer, as the polymer compound, at least one selected from the group consisting of a polyamideimide, a polyetherimide, a polyimide and a thermoplastic polyimide is preferred, and at least one selected from the group consisting of a polyamideimide and a polyimide is more preferred. Alternatively, two or more polymer compounds may be used in combination as polymer compound. For example, as the polymer compound, a combination of a polyamideimide and a polyimide may be used.

Polyamideimide is a resin made of a polymer having an amide bond and an imide bond in the molecular structure. The polyamideimide is not limited, and examples thereof include a resin formed of a high molecular weight polymer obtained by each of: a reaction between an aromatic diamine having an amide bond in the molecule and a tetravalent aromatic carboxylic acid such as pyromellitic acid; a reaction between a trivalent aromatic carboxylic acid such as trimellitic anhydride and a diamine such as 4,4-diamino phenyl ether or a diisocyanate such as diphenylmethane diisocyanate; and a reaction between a dibasic acid having an aromatic imide ring in the molecule and a diamine. As the polyamideimide, one formed of a polymer having an aromatic ring in the main chain is preferred.

Polyimide is a resin made of polymer having an imide bond in the molecular structure. The polyimide is not limited, and examples thereof include a resin formed of a high molecular weight polymer obtained by, for example, a reaction of a tetravalent aromatic carboxylic anhydride such as pyromellitic anhydride. As the polyimide, one formed of a polymer having an aromatic ring in the main chain is preferred.

(Fluorine-containing polymer compound)

Subsequently, the fluorine-containing polymer compound for use in the coating layer of the coated electric wire is described. The fluorine-containing polymer compound described below may be suitably used as the fluorine-containing polymer compound (2) to form the second layer and as the fluorine-containing polymer compound (3) to form the third layer.

The fluorine-containing polymer compound is a polymer compound having a fluorine atom. The fluorine-containing polymer compound is usually a polymer compound in which hydrogen atoms bonded to carbon atoms of the main chain is partially or wholly substituted with fluorine atoms.

From the viewpoint of obtaining a coating layer having an even lower relative dielectric constant and an even higher partial discharge inception voltage, a perfluoropolymer compound is preferred as the fluorine-containing polymer compound. In the present disclosure, the perfluoropolymer compound is a polymer compound having a perfluoromonomer unit content of 90 mol% or more relative to the whole polymerization unit of the polymer compound.

In the present disclosure, the perfluoromonomer is a monomer including no carbon atom-hydrogen atom bond in the molecule. The perfluoromonomer may be a monomer having a carbon atom and a fluorine atom, with some of the fluorine atoms bonded to a carbon atom being substituted with a chlorine atom, or may be a monomer having a nitrogen atom, oxygen atom, sulfur atom, phosphorus atom, boron atom or silicon atom in addition to a carbon atom. As the perfluoromonomer, a monomer with all the hydrogen atoms substituted with fluorine atoms is preferred.

From the viewpoint of obtaining a coating layer having an even lower relative dielectric constant and even higher partial discharge inception voltage, the relative dielectric constant of the fluorine-containing polymer compound is preferably 2.0 to 2.2, more preferably 2.1 or less. The relative dielectric constant of the fluorine-containing polymer compound may be measured at 23°C±2°C, a relative humidity of 50%, and a frequency of 1 kHz according to JIS-C-2138.

As the fluorine-containing polymer compound, a fluororesin is preferred. In the present disclosure, the fluororesin is a partially crystalline fluoropolymer or fluoroplastic. The fluororesin has a melting point and thermoplasticity, and may be melt-fabricable or non melt-fabricable.

Examples of the fluororesin include a polytetrafluoroethylene, a tetrafluoroethylene (TFE)/fluoroalkyl vinyl ether (FAVE) copolymer, a tetrafluoroethylene (TFE)/hexafluoropropylene (HFP) copolymer, a TFE/FAVE/HFP copolymer, a TFE/ethylene copolymer [ETFE], a TFE/ethylene/HFP copolymer, an ethylene/chlorotrifluoroethylene (CTFE) copolymer [ECTFE], polychlorotrifluoroethylene [PCTFE], a CTFE/TFE copolymer, polyvinylidene fluoride [PVdF], a TFE/vinylidene fluoride (VdF) copolymer [VT], polyvinyl fluoride [PVF], a TFE/VdF/CTFE copolymer [VTC], and a TFE/HFP/VdF copolymer.

As the fluororesin, in particular, at least one selected from the group consisting of a polytetrafluoroethylene, a TFE/FAVE copolymer and a TFE/HFP copolymer and a TFE/FAVE/HFP copolymer is preferred.

Although the polytetrafluoroethylene (PTFE) may be a non melt-fabricable PTFE or a melt-fabricable PTFE, a non melt-fabricable PTFE is preferred.

The non melt-fabricable PTFE usually has stretchability, fibrillation properties and non melt-secondary fabricability. The non melt-secondary fabricability means properties that the melt flow rate is unmeasurable at a temperature higher than the crystallization melting point according to ASTM D 1238 and D 2116, i.e., difficult-to-flow properties even in a melting temperature region.

The PTFE may be a homopolymer of tetrafluoroethylene (TFE) or may be a modified PTFE containing a TFE unit and a modified monomer unit. In the present disclosure, the "modified PTFE" means a copolymer obtained by copolymerizing TFE and a comonomer in a small amount not to impart melt-fabricability to the resulting copolymer. The comonomer is not limited, and examples thereof include hexafluoropropylene [HFP], chlorotrifluoroethylene [CTFE] and perfluoro(alkyl vinyl ether) [PAVE]. The proportion of the comonomer added to the modified PTFE is different depending on the type, and preferably 0.001 to 1 mass% relative to the total mass of TFE and a small amount of comonomer. In the present disclosure, the content of each of the monomer units of PTFE may be calculated through appropriate combinations of NMR, FT-IR, elemental analysis and X-ray fluorescence analysis depending on the type of the monomer.

PTFE has a standard specific gravity (SSG) of preferably 2.280 or less, more preferably 2.210 or less, still more preferably 2.200 or less, and preferably 2.130 or more. SSG may be measured by water replacement method according to ASTM D 792, using a sample formed according to ASTM D 4895-89.

It is preferable that PTFE has a peak temperature in the range of 333 to 347°C. More preferably, the temperature is 335°C or more and 345°C or less. The peak temperature is temperature corresponding to the maximum value in the heat-of-fusion curve when PTFE having no thermal history at a temperature of 300°C or more is heated at a rate of 10°C/minute using a differential scanning calorimeter [DSC].

As the fluorine-containing polymer compound, a melt-fabricable fluorine-containing polymer compound may be also used. In particular, from the viewpoint of easy forming of a layer having a desired thickness, use of a melt-fabricable fluorine-containing polymer compound as the fluorine-containing polymer compound (3) to form the third layer is preferred. Also, from the viewpoint of easy forming of a layer having a desired thickness, use of a melt-fabricable fluorine-containing polymer compound as the fluorine-containing polymer compound (2) contained in the powder coating material composition (2) to form the second layer is preferred.

In the present disclosure, the term "melt-fabricable" means that a polymer can be melted for fabrication using a conventional processing device such as an extruder and injection molding machine. Accordingly, the melt-fabricable fluorine-containing polymer compound usually has a melt flow rate of 0.01 to 500 g/10 minutes.

The melt flow rate of the fluorine-containing polymer compound is preferably 0.1 to 100 g/10 minutes, more preferably 80 g/10 minutes or less, still more preferably 70 g/10 minutes or less, and preferably 5 g/10 minutes or more, more preferably 10 g/10 minutes or more.

The melt flow rate of the fluorine-containing polymer compound is a value obtained as the mass of polymer flowing out from a nozzle with an inner diameter of 2.1 mm and a length of 8 mm at 372°C, under a load of 5 kg, per 10 minutes (g/10 minutes), using a melt indexer (manufactured by Yasuda Seiki Seisakusho, Ltd.), according to ASTM D1238.

The melting point of the fluorine-containing polymer compound is preferably 200 to 322°C, more preferably 230°C or more, still more preferably 250°C or more, and more preferably 320°C or less.

The melting point may be measured using a differential scanning calorimeter [DSC].

As the melt-fabricable fluorine-containing polymer compound, a melt-fabricable fluororesin is preferred. Examples of the melt-fabricable fluororesin include a tetrafluoroethylene (TFE)/fluoroalkyl vinyl ether (FAVE) copolymer, a tetrafluoroethylene (TFE)/hexafluoropropylene (HFP) copolymer, a TFE/FAVE/HFP copolymer, a TFE/ethylene copolymer [ETFE], a TFE/ethylene/HFP copolymer, an ethylene/chlorotrifluoroethylene (CTFE) copolymer [ECTFE], polychlorotrifluoroethylene [PCTFE], a CTFE/TFE copolymer, polyvinylidene fluoride [PVdF], a TFE/vinylidene fluoride (VdF) copolymer [VT], polyvinyl fluoride [PVF], a TFE/VdF/CTFE copolymer [VTC], and a TFE/HFP/VdF copolymer.

As the melt-fabricable fluororesin, in particular, at least one selected from the group consisting of a TFE/FAVE copolymer, a TFE/HFP copolymer and a TFE/FAVE/HFP copolymer is preferred.

The TFE/FAVE copolymer is a copolymer containing tetrafluoroethylene (TFE) unit and a fluoroalkyl vinyl ether (FAVE) unit.

Examples of the FAVE that constitutes a FAVE unit include at least one selected from the group consisting of a monomer represented by a general formula (1):

$$CF_2=CFO(CF_2CFY^1O)_p\text{-}(CF_2CF_2CF_2O)_q\text{-}Rf \qquad (1)$$

wherein $Y^1$ represents F or $CF_3$, Rf represents a perfluoroalkyl group having 1 to 5 carbon atoms, p represents an integer of 0 to 5, and q represents an integer of 0 to 5; and

a monomer represented by a general formula (2):

$$CFX=CXOCF_2OR^1 \qquad (2)$$

wherein X are the same or different, and represents H, F or $CF_3$, $R^1$ represents a linear or branched fluoroalkyl group having 1 to 6 carbon atoms, which may include one to two pieces of at least one atom selected from the group consisting of H, Cl, Br and I, or represents a cyclic fluoroalkyl group having 5 or 6 carbon atoms, which may include one to two pieces of at least one atom selected from the group consisting of H, Cl, Br and I.

In particular, FAVE is preferably a monomer represented by the general formula (1), more preferably one selected from the group consisting of perfluoro(methyl vinyl ether), perfluoro(ethyl vinyl ether) (PEVE), and perfluoro(propyl vinyl ether) (PPVE), still more preferably one selected from the group consisting of PEVE and PPVE, and particularly preferably PPVE.

The FAVE unit content in the TFE/FAVE copolymer relative to all the monomer units is preferably 1.0 to 30.0 mol%, more preferably 1.2 mol% or more, still more preferably 1.4 mol% or more, further preferably 1.6 mol% or more, particularly preferably 1.8 mol% or more, and more preferably 3.5 mol% or less, still more preferably 3.2 mol% or less, further preferably 2.9 mol% or less, particularly preferably 2.6 mol% or less.

The TFE unit content in the TFE/FAVE copolymer relative to all the monomer units is preferably 99.0 to 70.0 mol%, more preferably 96.5 mol% or more, still more preferably 96.8 mol% or more, further preferably 97.1 mol% or more, particularly preferably 97.4 mol% or more, and more preferably 98.8 mol% or less, still more preferably 98.6 mol% or less, further preferably 98.4 mol% or less, particularly preferably 98.2 mol% or less.

In the present disclosure, the content of each monomer unit in the copolymer is measured by $^{19}$F-NMR method.

The TFE/FAVE copolymer may contain a monomer unit derived from a monomer copolymerizable with TFE and FAVE. In that case, the content of the monomer copolymerizable with TFE and FAVE relative to all the monomer units of the TFE/FAVE copolymer is preferably 0 to 29.0 mol%, more preferably 0.1 to 5.0 mol%, still more preferably 0.1 to 1.0 mol%.

Examples of the monomer copolymerizable with TFE and FAVE include HFP, a vinyl monomer represented by $CZ^1Z^2=CZ^3(CF_2)_nZ^4$, wherein $Z^1$, $Z^2$ and $Z^3$ are the same or different and represent H or F; $Z^4$ represents H, F or Cl; and n represents an integer of 2 to 10; an alkyl perfluoro vinyl ether derivative represented by $CF_2=CF\text{-}OCH_2\text{-}Rf^1$, wherein $Rf^1$ represents a perfluoroalkyl group having 1 to 5 carbon atoms; and a monomer having a functional group. In particular, HFP is preferred.

The TFE/FAVE copolymer is preferably one selected from the group consisting of a copolymer including a TFE unit and an FAVE unit only, and the TFE/HFP/FAVE copolymer; and more preferably the copolymer including a TFE unit and an FAVE unit only.

The melting point of the TFE/FAVE copolymer is preferably 280 to 322°C, more preferably 285°C or more, and more preferably 320°C or less, still more preferably 315°C or less. The melting point may be measured by using a differential scanning calorimeter [DSC].

The glass transition temperature (Tg) of the TFE/FAVE copolymer is preferably 70 to 110°C, more preferably 80°C or more, and more preferably 100°C or less. The glass transition temperature may be measured by dynamic viscoelasticity measurement.

The TFE/HFP copolymer is a copolymer containing tetrafluoroethylene (TFE) unit and hexafluoropropylene (HFP) unit.

The HFP unit content in the TFE/HFP copolymer relative to all the monomer units is preferably 0.1 to 30.0 mol%, more preferably 0.7 mol% or more, still more preferably 1.4 mol% or more, and more preferably 10.0 mol% or less.

The TFE unit content in the TFE/HFP copolymer relative to all the monomer units is preferably 70.0 to 99.9 mol%, and more preferably 90.0 mol% or more, more preferably 99.3 mol% or less, still more preferably 98.6 mol%.

The TFE/HFP copolymer may contain a monomer unit derived from a monomer copolymerizable with TFE and HFP. In that case, the content of the monomer copolymerizable with TFE and HFP relative to all the monomer units of the TFE/HFP copolymer is preferably 0 to 29.9 mol%, more preferably 0.1 to 5.0 mol%, still more preferably 0.1 to 1.0 mol%.

Examples of the monomer copolymerizable with TFE and HFP include FAVE, a vinyl monomer represented by $CZ^1Z^2=CZ^3(CF_2)_nZ^4$, wherein $Z^1$, $Z^2$ and $Z^3$ are the same or different and represent H or F; $Z^4$ represents H, F or Cl; and n represents an integer of 2 to 10; an alkyl perfluoro vinyl ether derivative represented by $CF_2=CF-OCH_2-Rf^1$, wherein $Rf^1$ represents a perfluoroalkyl group having 1 to 5 carbon atoms; and a monomer having a functional group. In particular, FAVE is preferred.

The melting point of the TFE/HFP copolymer is preferably 200 to 322°C, more preferably 210°C or more, still more preferably 220°C or more, particularly preferably 240°C or more, and more preferably 320°C or less, still more preferably less than 300°C, and particularly preferably 280°C or less.

The glass transition temperature (Tg) of the TFE/HFP copolymer is preferably 60 to 110°C, more preferably 65°C or more, and more preferably 100°C or less.

The fluorine-containing polymer compound may have a functional group.

The functional group is preferably at least one selected from the group consisting of a carbonyl group-containing group, an amino group, a hydroxy group, a $-CF_2H$ group, an olefinic group, an epoxy group and an isocyanate group.

The carbonyl group-containing group is a group that contains a carbonyl group (-C(=O)-) in the structure. Examples of the carbonyl group-containing group include:

a carbonate group [$-O-C(=O)-OR^3$, wherein $R^3$ is an alkyl group having 1 to 20 carbon atoms or an alkyl group having 2 to 20 carbon atoms that contains an etheric oxygen atom],

an acyl group [$-C(=O)-R^3$, wherein $R^3$ is an alkyl group having 1 to 20 carbon atoms or an alkyl group having 2 to 20 carbon atoms that contains an etheric oxygen atom],

a haloformyl group [$-C(=O)X^5$, wherein $X^5$ is a halogen atom],

a formyl group [$-C(=O)H$],

a group represented by a formula: $-R^4-C(=O)-R^5$, wherein $R^4$ is a divalent organic group having 1 to 20 carbon atoms, and $R^5$ is a monovalent organic group having 1 to 20 carbon atoms,

a group represented by a formula: $-O-C(=O)-R^6$, wherein $R^6$ is an alkyl group having 1 to 20 carbon atoms, or an alkyl group having 2 to 20 carbon atoms that contains an etheric oxygen atom,

a carboxyl group [$-C(=O)OH$],

an alkoxycarbonyl group [$-C(=O)OR^7$, wherein $R^7$ is a monovalent organic group having 1 to 20 carbon atoms],

a carbamoyl group [$-C(=O)NR^8R^9$, wherein $R^8$ and $R^9$ may be the same or different, being a hydrogen atom or a monovalent organic group having 1 to 20 carbon atoms], and

an acid anhydride bond [$-C(=O)-O-C(=O)-$].

Specific examples of $R^3$ include a methyl group, an ethyl group, a propyl group, an isopropyl group and a butyl group. Specific examples of $R^4$ described above include a methylene group, a $-CF_2-$ group and a $-C_6H_4-$ group, and specific examples of $R^5$ include a methyl group, an ethyl group, a propyl group, an isopropyl group and a butyl group. Specific examples of $R^7$ include a methyl group, an ethyl group, a propyl group, an isopropyl group and a butyl group. Further, specific examples of $R^8$ and $R^9$ include a hydrogen atom, a methyl group, an ethyl group, a propyl group, an isopropyl group, a butyl group and a phenyl group.

The hydroxy group is a group represented by -OH or a group containing a group represented by -OH. In the present disclosure, -OH that constitutes a carboxyl group is not included in the hydroxy group. Examples of the hydroxy group include -OH, a methylol group and an ethylol group.

The olefinic group is a group having a carbon-carbon double bond. Examples of the olefinic group include a functional group represented by the following formula:

**EP 4 583 125 A1**

-CR$^{10}$=CR$^{11}$R$^{12}$

wherein R$^{10}$, R$^{11}$ and R$^{12}$ may be the same or different, being a hydrogen atom, a fluorine atom or a monovalent organic group having 1 to 20 carbon atoms,
and at least one selected from the group consisting of - CF=CF$_2$, -CH=CF$_2$, -CF=CHF, -CF=CH$_2$ and -CH=CH$_2$ is preferred.

The isocyanate group is a group represented by -N=C=O.

Alternatively, examples of the functional group may include a non-fluorinated alkyl group or a partly fluorinated alkyl group such as a -CH$_3$ group and a -CFH$_2$ group.

The number of functional groups of the fluorine-containing polymer compound is preferably 5 to 2,000 per 1,000,000 carbon atoms. The number of functional groups per 10$^6$ carbon atom is more preferably 50 or more, still more preferably 100 or more, particularly preferably 200 or more, and more preferably 1,000 or less, still more preferably 800 or less, particularly preferably 700 or less, most preferably 500 or less.

From the viewpoint of forming a coating layer excellent in electrical characteristics, the fluorine-containing polymer compound may have less than 5, or 0 to 4, functional groups per 10$^6$ carbon atoms. It is particularly preferable that the melt-fabricable fluorine-containing polymer compound have functional groups in the numerical range.

The functional group includes a functional group present at an end of the main chain or at an end of the side chain of a fluorine-containing polymer compound, and a functional group present in the main chain or in the side chain, suitably present at an end of the main chain. Examples of the functional group include -CF=CF$_2$, -CF$_2$H, -COF, -COOH, -COOCH$_3$, -CONH$_2$, -OH, -CH$_2$OH, and at least one selected from the group consisting of -CF$_2$H, -COF, -COOH, -COOCH$_3$ and -CH$_2$OH is preferred. The -COOH includes a dicarboxylic acid anhydride (-CO-O-CO-) which is formed through bonding of two -COOH.

In identification of the type of the functional group and measurement of the number of functional groups, infrared spectroscopy may be used.

Specifically, the number of functional groups are measured by the following method. First, a copolymer is melted at 330 to 340°C for 30 minutes, and compression molded into a film having a thickness of 0.20 to 0.25 mm. The film is analyzed by Fourier transform infrared spectroscopy to obtain an infrared absorption spectrum of the copolymer. A differential spectrum, which is a difference from a base spectrum of completely fluorinated polymer having no functional group, is then obtained. From the absorption peak of a specific functional group in the differential spectrum, the number N of functional group per $1\times10^6$ carbon atoms in the copolymer is calculated according to the following formula (A) .

$$N=I\times K/t \qquad (A)$$

I: absorbance
K: correction coefficient
T: film thickness (mm)

For reference sake, the absorption frequency, molar absorption coefficient and correction coefficient of the functional groups of the present disclosure are shown in Table 1. Incidentally, the molar absorption coefficient is determined from the FT-IR measurement data of a low molecular weight model compound.

[Table 1]

Table 1

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | C$_7$F$_{15}$COF |
| -COOH free | 1815 | 530 | 439 | H(CF$_2$)$_6$COOH |
| -COOH bonded | 1779 | 530 | 439 | H(CF$_2$)$_6$COOH |
| -COOCH$_3$ | 1795 | 680 | 342 | C$_7$F$_{15}$COOCH$_3$ |
| -CONH$_2$ | 3436 | 506 | 460 | C$_7$H$_{15}$CONH$_2$ |

(continued)

| Functional Group | Absorption Frequency (cm$^{-1}$) | Molar Extinction Coefficient (l/cm/mol) | Correction Factor | Model Compound |
|---|---|---|---|---|
| -CH$_2$OH$_2$, -OH | 3648 | 104 | 2236 | C$_7$H$_{15}$CH$_2$OH |
| -CF$_2$H | 3020 | 8.8 | 26485 | H(CF$_2$CF$_2$)$_3$CH$_2$OH |
| -CF=CF$_2$ | 1795 | 635 | 366 | CF$_2$=CF$_2$ |

Incidentally, the absorption frequency of each of -CH$_2$CF$_2$H, -CH$_2$COF, -CH$_2$COOH, -CH$_2$COOCH$_3$ and -CH$_2$CONH$_2$ is lower by several tens of kayser (cm$^{-1}$) than the absorption frequency shown in Table for each of -CF$_2$H, -COF, free -COOH and bonded-COOH, -COOCH$_3$ and -CONH$_2$.

Accordingly, for example, the number of functional groups -COF is a total of the number of functional groups determined from the absorption peak at an absorption frequency of 1883 cm$^{-1}$ caused by -CF$_2$COF and the number of functional groups determined from the absorption peak at an absorption frequency of 1840 cm$^{-1}$ caused by -CH$_2$COF.

The number of functional groups may be a total number of -CF=CF$_2$, -CF$_2$H, -COF, -COOH, -COOCH$_3$, -CONH$_2$ and -CH$_2$OH, or may be a total number of -CF$_2$H, -COF, -COOH, -COOCH$_3$ and -CH$_2$OH.

The functional group is introduced into the fluorine-containing polymer compound, for example, through a chain transfer agent or a polymerization initiator used in production of the fluorine-containing polymer compound. For example, in the case of using an alcohol as chain transfer agent, or using peroxide having a -CH$_2$OH structure as polymerization initiator, the -CH$_2$OH is introduced into the main chain end of the fluorine-containing polymer compound. Alternatively, through polymerization of a monomer having a functional group, the functional group is introduced into the side chain end of the fluorine-containing polymer compound. The fluorine-containing polymer compound may contain a unit derived from the monomer having a functional group.

Examples of the monomer having a functional group include a cyclic hydrocarbon monomer having a dicarboxylic acid anhydride group (-CO-O-CO-) and having a polymerizable unsaturated group in a ring described in Japanese Patent Laid-Open No. 2006-152234, and a monomer having a functional group (f) described in International Publication No. WO 2017/122743. In particular, examples of the monomer having a functional group include a monomer having a carboxy group (maleic acid, itaconic acid, citraconic acid, undecylenic acid, etc.); a monomer having an acid anhydride group (itaconic acid anhydride, citraconic acid anhydride, 5-nobornene-2,3-dicarboxylic acid anhydride, maleic acid anhydride, etc.), and a monomer having a hydroxy group or an epoxy group (hydroxybutyl vinyl ether, glycidyl vinyl ether, etc.).

The fluorine-containing polymer compound may be produced, for example, by a conventionally known method such as appropriately mixing a monomer as constituent unit and an additive such as polymerization initiator to perform emulsion polymerization or suspension polymerization.

(Method for producing coated electric wire)

The coated electric wire of the present disclosure may be produced by a production method including, for example,

applying a liquid coating material composition (1) to an outer periphery of the flat electric wire substrate to form a first layer,
applying a liquid coating material composition (2) or a powder coating material composition (2) to the outer periphery of the first layer to form a second layer, and
extruding a fluorine-containing polymer compound (3) to the outer periphery of the second layer to form a third layer by extrusion method.

The method of applying a liquid coating material composition to form a layer is not limited, and examples thereof include spray coating, roll coating, coating with a doctor blade, dip (immersion) coating and impregnation coating.

After application of a liquid coating material composition, the resulting coating film may be dried and/or fired to form a layer. Drying may be performed by a conventional method preferably at a drying temperature of 60 to 200°C for 5 to 60 minutes. Firing may be performed by a conventional method preferably at a temperature equal to or more than the melting point or curing point of the polymer compound or the fluorine-containing polymer compound for 5 to 60 minutes. The firing may be performed every time when the coating material composition is applied, or after a plurality of application of the coating material compositions to form a plurality of layers (coating film).

The method of applying a powder coating material composition to form a layer is not limited, and examples of the method include electrostatic coating and fluidized bed coating.

After application of the powder coating material composition, the resulting coating film may be fired to form a layer.

Firing may be performed by a conventional method preferably at a temperature equal to or more than the melting point or curing point of the polymer compound or the fluorine-containing polymer compound for 5 to 60 minutes. The firing may be performed every time when the coating material composition is applied, or after a plurality of application of the coating material compositions to form a plurality of layers (coating film).

As the method of extruding a fluorine-containing polymer compound to form a layer, extrusion method is employed. For example, using an extruder, a fluorine-containing polymer compound is melted by heating, and the fluorine-containing polymer compound in a melted state is extruded onto the second layer to form a layer.

The type of the extruder is not limited, and the shape of the screw the extruder has is also not limited. For example, an extruder has a barrel diameter of 30 mm, L/D of 24, a full flight screw, and a compression ratio of 2.8. As the temperature conditions for extrusion, the cylinder temperatures C1 under the hopper, C2, C3 and C4 in order are adjusted, and temperature of each of head, die and dice are adjusted. The shape of the die is such that a crosshead at which the flat electric wire substrate is inserted vertically to the extrusion to be coated with the fluorine-containing polymer compound. The die/chip for use is adjusted to the desired shape of the flat electric wire substrate and the coating thickness. A tubing die, a pressure die, etc. may be used depending on the situation. Cooling of the resin after extrusion coating such as air cooling, water cooling and heat insulation cooling may be controlled in consideration of the physical properties of the desired fluorine-containing polymer compound and the physical properties of the electric wire.

The temperature setting during the extrusion of the fluorine-containing polymer compound is adjusted in consideration of the melt viscosity and melting point of the fluorine-containing polymer compound, and for example, C1 at the material supply part is preferably 180 to 320°C as the temperature at which the fluorine-containing polymer compound in an unmelted state or halfmelted state is pushed forward. C2, C3 and C4 are preferably 290 to 420°C as the temperature at which the fluorine-containing polymer compound can be stably sent to the head and die. With a too low temperature, the productivity worsens, while with a too high temperature, the fluorine-containing polymer compound may deteriorate. Also, in consideration of the rotation speed of the screw, the retention time of the fluorine-containing polymer compound in the extruder is controlled to perform the forming. Based on this, the line speed of the electric wire coating is adjusted to obtain an electric wire having a target coating thickness. In the same manner, the temperatures of each of the head, die and dice are also set to a temperature of 290 to 420°C in consideration of the shear rate of the fluorine-containing polymer compound. Furthermore, it is preferable that the flat electric wire substrate and the flat electric wire substrate having a coating inner layer be heated before entering the crosshead, because the adhesion strength can be improved. The temperature of the flat electric wire substrate may be controlled at a temperature of the coating resin in the die exit $\pm50$°C.

The coated electric wire may be heat treated. The heat treatment may be performed before cooling or after cooling, at any time after formation of the outermost layer. The temperature for the heat treatment is usually equal to or more than the glass transition point of the fluororesin, preferably a temperature less than the melting point minus 10°C, and preferably a temperature less than the melting point minus 15°C of the fluororesin.

The coated electric wire of the present disclosure is suitably used for, for example, an LAN cable, a USB cable, a lightning cable, an HDMI cable, a QSFP cable, an electric wire for aerospace, an underground power cable, a submarine power cable, a high voltage cable, a superconducting cable, a wrapping electric cable, an electric wire for automobiles, a wire harness/electrical component, an electric wire for robots/FA, an electric wire for OA devices, an electric wire for information equipment (optical fiber cable, LAN cable, HDMI cable, lightening cable, audio cable, etc.), internal wiring for communication base stations, heavy-current internal wiring (inverter, power conditioners, battery storage systems, etc.), internal wiring for electronic devices, small electronic device/mobile wiring, moving part wiring, internal wiring of electric equipment, internal wiring of measuring devices, an electric power cable (for construction, wind power/solar power generation, etc.), a cable for control/instrument wiring, and a cable for motors.

The coated electric wire of the present disclosure may be wound for use as a coil. The coated electric wire and coil of the present disclosure may be suitably used for electric devices or electronic devices such as a motor, a generator, an inductor. Further, the coated electric wire and coil of the present disclosure may be suitably used for on-vehicle electric devices or on-vehicle electronic devices such as an on-vehicle motor, an on-vehicle generator, and an on-vehicle inductor.

Having described an embodiment in the above, it is understood that various changes in the embodiment and details are possible without departing from the sprit and scope of the claims.

<1> From a first aspect of the present disclosure, provided is:

a coated electric wire comprising a flat electric wire substrate and a coating layer formed on an outer periphery of the flat electric wire substrate,
wherein the coating layer includes
a first layer formed of a liquid coating material composition (1) containing a polymer compound (1) having any one or both of an amide group and an imide group,
a second layer formed of a liquid coating material composition (2) containing a polymer compound (2) having any one or both of an amide group and an imide group, and a fluorine-containing polymer compound (2), or of a powder coating material composition (2) containing a polymer compound (2) having any one or both of an amide group and an imide group, and a fluorine-containing polymer compound (2), and

a third layer formed by extrusion of a fluorine-containing polymer compound (3).

<2> From a second aspect of the present disclosure, provided is:

the coated electric wire according to the first aspect, wherein the polymer compound (1) or the polymer compound (2) is at least one selected from the group consisting of polyamideimide, polyetherimide, polyimide and thermoplastic polyimide.

<3> From a third aspect of the present disclosure, provided is:

the coated electric wire according to the first or second aspect, wherein the fluorine-containing polymer compound (2) or the fluorine-containing polymer compound (3) is a perfluoro-based polymer compound.

<4> From a fourth aspect of the present disclosure, provided is:

the coated electric wire according to any one of the first to third aspects, wherein the fluorine-containing polymer compound (2) or the fluorine-containing polymer compound (3) has a relative dielectric constant of 2.0 to 2.2.

<5> From a fifth aspect of the present disclosure, provided is:

the coated electric wire according to any one of the first to fourth aspects, wherein the fluorine-containing polymer compound (3) has a melting point of 250 to 320°C.

<6> From a sixth aspect of the present disclosure, provided is:

the coated electric wire according to any one of the first to fifth aspects, wherein a volume ratio between the polymer compound (2) and the fluorine-containing polymer compound (2) is 10/90 to 90/10.

<7> From a seventh aspect of the present disclosure, provided is:

the coated electric wire according to any one of the first to sixth aspects, wherein a material forming the flat electric wire substrate is at least one selected from the group consisting of copper, copper alloy, aluminum and aluminum alloy.

<8> From an eighth aspect of the present disclosure, provided is:

the coated electric wire according to any one of the first to seventh aspects, wherein the flat electric wire substrate has a surface roughness Sz in the range of 0.2 to 12 $\mu$m.

<9> From a ninth aspect of the present disclosure, provided is:

the coated electric wire according to any one of the first to eighth aspects, wherein the coating layer has a thickness of 30 to 500 $\mu$m, and the coating layer has a relative dielectric constant of 2.1 to 2.8.

<10> From a tenth aspect of the present disclosure, provided is:

the coated electric wire according to any one of the first to ninth aspects, wherein the third layer has a thickness of 50 to 300 $\mu$m.

<11> From an eleventh aspect of the present disclosure, provided is:

the coated electric wire according to any one of the first to tenth aspects, wherein a partial discharge inception voltage of the coating layer satisfies the following relational expression:

$$\text{Partial discharge inception voltage (Vp)} \geq 7.2 \times t + 880$$

t: thickness of the coating layer ($\mu$m)

<12> From a twelfth aspect of the present disclosure, provided is:

the coated electric wire according to any one of the first to eleventh aspects, wherein the fluorine-containing polymer compound (2) or the fluorine-containing polymer compound (3) has 5 to 1,000 functional groups per $10^6$ carbon atoms.

<13> From a thirteenth aspect of the present disclosure, provided is:

the coated electric wire according to any one of the first to eleventh aspects, wherein the fluorine-containing polymer compound (3) has 0 to 4 functional groups per $10^6$ carbon atoms.

<14> From a fourteenth aspect of the present disclosure, provided is:

the coated electric wire according to any one of the first to thirteenth aspects, wherein the fluorine-containing polymer compound (3) has a melt flow rate (MFR) of 0.1 to 100 g/10 minutes.

<15> From a fifteenth aspect of the present disclosure, provided is:

the coated electric wire according to any one of the first to fourteenth aspects, wherein the liquid coating material composition (2) has a viscosity of 10 to 10,000 (cP).

<16> From a sixteenth aspect of the present disclosure, provided is:

the coated electric wire according to any one of the first to fifteenth aspects, wherein the powder coating material composition (2) has an average particle size of 1 to 100 ($\mu$m).

<17> From a seventeenth aspect of the present disclosure, provided is:

the coated electric wire according to any one of the first to sixteenth aspects, wherein the first layer is formed on the outer periphery of the flat electric wire substrate, the second layer is formed on an outer periphery of the first layer, and the third layer is formed on an outer periphery of the second layer.

<18> From an eighteenth aspect of the present disclosure, provided is:

a method for producing a coated electric wire, which is for producing the coated electric wire according to any one of the first to seventeenth aspects, comprising:
applying a liquid coating material composition (1) to an outer periphery of the flat electric wire substrate to form a first layer,
applying a liquid coating material composition (2) or a powder coating material composition (2) to an outer periphery of the first layer to form a second layer, and
extruding a fluorine-containing polymer compound (3) to an outer periphery of the second layer to form a third layer by extrusion method.

<19> From a nineteenth aspect of the present disclosure, provided is:
a motor comprising the coated electric wire according to any one of the first to seventeenth aspects.

EXAMPLES

Next, an embodiment of the present disclosure is described with reference to Examples, though the present disclosure is not limited to the Examples only.
The respective numerical values in Examples were measured by the following methods.

(Surface roughness Sz)

The surface roughness Sz was measured in a field of view of 8,000 $\mu m^2$ with a laser microscope.

(Number of functional group)

A fluorine-containing polymer compound was melted at 330 to 340°C for 30 minutes and compression molded to make a film having a thickness of 0.20 to 0.25 mm. The film was scanned 40 times by a Fourier transform infrared spectroscopy (FT-IR (trade name: 1760X type, manufactured by PerkinElmer, Inc.) to obtain an infrared absorption spectrum through analysis. A differential spectrum, which is a difference from a base spectrum of a completely fluorinated resin having no functional group, was obtained. From the absorption peak of a specific functional group appearing in the differential spectrum, the number N of the functional groups per $10^6$ carbon atoms in the fluorine-containing polymer compound was calculated according to the following formula (A).

$$N=I\times K/t \qquad (A)$$

I: absorbance

K: correction coefficient

T: film thickness (mm)

For reference sake, the absorption frequency, molar absorption coefficient and correction coefficient of the functional groups of the present disclosure are shown in Table 2. Incidentally, the molar absorption coefficient was determined from the FT-IR measurement data of a low molecular weight model compound.

[Table 2]

### Table 2

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Viscosity)

The viscosity of the coating material composition was measured using a B-type viscometer described in JIS Z8803 (BII-type viscometer manufactured by Toki Sangyo Co., Ltd.). In the measurement, a rotating rotor #4 was used. The measurement temperature was set at 25°C.

(Average particle size)

The average particle size of the powder coating material composition was measured with a laser diffraction/-scattering particle size distribution measurement apparatus manufactured by Nikkiso Co., Ltd. The particle size at the median in the volume-based particle size distribution (median diameter) was defined as average particle size.

(Melt flow rate (MFR))

According to ASTM D1238, the mass of the copolymer flowing out through a nozzle having an inner diameter of 2.1 mm and a length of 8 mm per 10 minutes (g/10 minutes) at 372°C under a load of 5 kg was determined, using a melt indexer (manufactured by Yasuda Seiki Seisakusho, Ltd.).

(Melting point)

The melting point was determined as the temperature corresponding to the maximum value in the heat-of-fusion curve when the temperature was raised at a rate of 10°C/minute, using a differential scanning calorimeter [DSC].

(Covering thickness)

The coating thickness was measured with a micrometer.

(Relative dielectric constant)

Based on the electrostatic capacitance obtained with LCR Hitester 3522-50 manufactured by Hioki E. E. Corporation, the relative dielectric constant ($\varepsilon$) was calculated from the following formula:

$$C=Ca+Cb$$

wherein C is electrostatic capacitance per unit length of the coating (pf/m), which is a synthesis of the electrostatic capacitance Ca of a flat portion and the electrostatic capacitance Cb of a corner portion.

$$Ca=(\varepsilon/\varepsilon_0)\times2\times(L_1+L_2)/T$$

$$Cb=(\varepsilon/\varepsilon_0)\times2\pi\varepsilon_0/Log\{(r+T)/r\}/r$$

wherein $\varepsilon_0$ is the dielectric constant of vacuum, $L_1$ is the length of the long side of a flat electric wire substrate in a flat portion, $L_2$ is the length of the short side of a flat electric wire substrate in a flat portion, T is the coating thickness of the whole of an electric wire, and r is the radius of curvature of the corner of a conductor.

(Partial discharge inception voltage (PDIV))

The surfaces including the long side of the cross section of two coated electric wires (length: 140 mm) were stacked to each other without a gap over a length of 100 mm to prepare a test piece. The insulating coating film of the sample was then removed at an end with a length of 10 mm. The measurement was performed by applying 50-Hz sine wave alternating voltage between the flat electric wire substrates of two coated electric wires, under an atmosphere at a relative humidity of 50%, using a partial discharge measuring device (DAC-PD-7, manufactured by Soken Electric Co., Ltd.). With a voltage raising rate set to 50 V/sec, a voltage lowering rate set to 50 V/sec, and a voltage holding time set to 0 sec, the voltage at a time of discharge of 10 pC or more was defined as partial discharge inception voltage.

(Bending test)

When both sides 10 mm away from a base point of a **U**-shaped coil were bent to R2 in the long axis direction, one that had no floating/wrinkles on the coating layer was evaluated as good, and one that had floating/wrinkles was evaluated as poor.

(Adhesion strength between substrate and coating layer)

AGS-J Autograph (50 N) (manufactured by Shimadzu Corporation) was used for the measurement. Two approximately parallel notches with a length of 50 mm in the long axis direction were made, and at both ends thereof, the coating was notched at right angle in the short axis direction. The ends were peeled to a length of 10 mm and clamped in the upper chuck. The conductor was fixed to the lower part to horizontalize the long face direction. When the device was moved in the pulling direction, using a jig moving in the lateral direction responding to the moving distance in the vertical direction in an interlocking manner, the angle was adjusted such that the peeled coating was always vertical to the conductor in the long face direction. The tensile stress was measured for pulling at 100 mm/min to a peel length of 30 mm, and the maximum point stress was defined as adhesion strength. An adhesion strength of 0.1 N/mm or more was determined to be in sufficiently close contact and evaluated as good. An adhesion strength of less than 0.1 N/mm was evaluated as poor.

Example 1

A liquid coating material composition A was applied to the outer periphery of a flat electric wire substrate made of copper having a surface roughness Sz of 1.8 $\mu$m and fired to form a first layer. Further, on the outer periphery thereof, a liquid coating material composition B was applied and fired to form a second layer. Further, on the outer periphery thereof, a fluorine-containing polymer compound L was extruded to form a third layer by extrusion method. The details of the method for forming the first layer from the liquid coating material composition A and the method for forming the second layer from the liquid coating material composition B are described as follows. Various properties of the resulting coated electric wire were measured. The results are shown in Table 3.

Examples 2 to 7

Covered electric wires were obtained in the same manner as in Example 1, except that the compositions and the fluorine-containing polymer compound to form the first layer, the second layer and the third layer were changed as described in Table 3. The various properties of the resulting coated electric wire were measured. The results are shown in Table 3.

Comparative Example 1

A coated electric wire was obtained in the same manner as in Example 1, except that no first layer was formed. Various properties of the resulting coated electric wire were measured. The results are shown in Table 3.

Forming of first layer from liquid coating material composition A

A PAI varnish (resin content: 20 wt%) including polyamideimide (PAI) dissolved in 3-methoxy-N,N-dimethylpropaneamide was used as the liquid coating material composition A. The viscosity thereof was 341 cP.

The liquid coating material composition A was sprayed, dried at 100°C for 15 minutes, and then fired at 230°C for 20 minutes, so that a coating film having a thickness of 10 $\mu$m was obtained.

Forming of second layer from liquid coating material composition B

A polyamideimide (PAI) varnish (resin content: 34 wt%) was fed into water to precipitate PAI. The precipitate was crushed with a ball mill to obtain a water dispersion of PAI (solid content: 20 wt%). A water dispersion composition of PTFE (solid content: 60 wt%, number of functional groups: 18 pieces per $10^6$ carbon atoms) and water were added thereto to obtain a liquid coating material composition B with PAI/PTFE=25/75 (vol%). The viscosity thereof was 138 cP.

The liquid coating material composition B was sprayed, dried at 100°C for 15 minutes, and then fired at 380°C for 20 minutes, so that a coating film having a thickness of 19 $\mu$m was obtained.

Forming of second layer from liquid coating material composition C

A polyimide (PI) varnish (resin content: 29 wt%) was fed into water to precipitate PI. The precipitate was crushed with a ball mill to obtain a water dispersion of PI (solid content: 20 wt%). A water dispersion composition of PTFE (solid content: 60 wt%, number of functional groups: 18 pieces per $10^6$ carbon atoms) and water were added thereto to obtain a liquid coating material composition C with PI/PTFE=30/70 (vol%). The viscosity thereof was 145 cP.

The liquid coating material composition C was sprayed, dried at 100°C for 15 minutes, and then fired at 380°C for 20 minutes, so that a coating film having a thickness of 21 $\mu$m was obtained.

Forming of second layer from liquid coating material composition D

A PFA powder (TFE/PPVE copolymer, number of functional groups: 220 pieces per $10^6$ carbon atoms, MFR: 27 g/10 min, melting point: 301°C, average particle size: 24 $\mu$m) and 3-methoxy-N,N-dimethylpropaneamide were added to a polyamideimide (PAI) varnish (resin content: 34 wt%) to obtain a liquid coating material composition D with PAI/PFA=25/75 (vol%). The viscosity thereof was 367 cP.

The liquid coating material composition D was sprayed, dried at 100°C for 15 minutes, and then fired at 380°C for 20 minutes, so that a coating film having a thickness of 22 $\mu$m was obtained.

Forming of second layer from powder coating material composition E

A polyamideimide (PAI) powder (average particle size: 20 $\mu$m) and PFA powder (TFE/PPVE copolymer, number of functional groups: 220 pieces per $10^6$ carbon atoms, MFR: 27 g/10 min, melting point: 301°C, average particle size: 24 $\mu$m) were mixed to obtain a powder coating material composition E with PAI/PFA=20/80 (vol%). The average particle size thereof was 23 $\mu$m.

The powder coating material composition E was electrostatically applied and fired at 380°C for 20 minutes, so that a coating film having a thickness of 20 $\mu$m was obtained.

Forming of second layer from powder coating material composition F

A polyamideimide (PAI) powder (average particle size: 20 $\mu$m) and FEP powder (TFE/HFP copolymer, number of functional groups: 625 pieces per $10^6$ carbon atoms, MFR: 38 g/10 min, melting point: 258°C, average particle size: 41 $\mu$m) were mixed to obtain a powder coating material composition F with PAI/FEP=20/80 (vol%). The average particle size thereof was 26 $\mu$m.

The powder coating material composition F was electrostatically applied and fired at 320°C for 20 minutes, so that a coating film having a thickness of 18 $\mu$m was obtained.

Forming of third layer from fluorine-containing polymer compound L

A PFA pellet (TFE/PPVE copolymer, number of functional groups: 55 pieces per $10^6$ carbon atoms, MFR: 12 g/10 min, melting point: 311°C) was used as fluorine-containing polymer compound L.

Forming of third layer from fluorine-containing polymer compound M

A PFA pellet (TFE/PPVE copolymer, number of functional groups: 169 pieces per $10^6$ carbon atoms, MFR: 28 g/10 min, melting point: 305°C) was used as fluorine-containing polymer compound M.

Forming of third layer from fluorine-containing polymer compound N

A PFA pellet (TFE/PPVE copolymer, number of functional groups: 808 pieces per $10^6$ carbon atoms, MFR: 68 g/10 min, melting point: 299°C) was used as fluorine-containing polymer compound N.

Forming of third layer from fluorine-containing polymer compound O

A FEP pellet (TFE/HFP copolymer, number of functional groups: 625 pieces per $10^6$ carbon atoms, MFR: 38 g/10 min, melting point: 258°C) was used as fluorine-containing polymer compound O.

EP 4 583 125 A1

[Table 3]

Table 3

| | Type of composition | Composition (volume ratio) | Thickness | Example | | | | | | | Comparative Example |
|---|---|---|---|---|---|---|---|---|---|---|---|
| | | | | 1 | 2 | 3 | 4 | 5 | 6 | 7 | 1 |
| **First layer** | | | | | | | | | | | |
| | Liquid coating material composition A | PAI=100 | 10 μm | ○ | ○ | ○ | ○ | ○ | ○ | ○ | |
| **Second layer** | | | | | | | | | | | |
| | Liquid coating material composition B | PAI/PTFE=25/75 | 19 μm | ○ | ○ | ○ | | | | | ○ |
| | Liquid coating material composition C | PI/PTFE=30/70 | 21 μm | | | | ○ | | | | |
| | Liquid coating material composition D | PAI/PFA=25/75 | 22 μm | | | | | ○ | | | |
| | Powder coating material composition E | PAI/PFA=20/80 | 20 μm | | | | | | ○ | | |
| | Powder coating material composition F | PAI/FEP=20/80 | 18 μm | | | | | | | ○ | |
| **Third layer** | | | | | | | | | | | |
| | Fluorine-containing polymer compound L | PFA=100 | 102 μm | ○ | | | ○ | ○ | ○ | | ○ |
| | Fluorine-containing polymer compound M | PFA=100 | 205 μm | | ○ | | | | | | |
| | Fluorine-containing polymer compound N | PFA=100 | 97 μm | | | ○ | | | | | |
| | Fluorine-containing polymer compound O | FEP=100 | 99 μm | | | | | | | ○ | |
| **Properties of coated electric wire** | | | | | | | | | | | |
| | Coating thickness of coating layer (μm) | | | 131 | 234 | 126 | 133 | 134 | 132 | 127 | 121 |
| | Relative dielectric constant of coating layer | | | 2.35 | 2.24 | 2.32 | 2.31 | 2.38 | 2.51 | 2.37 | 2.18 |
| | Partial discharge inception voltage (Vp) | | | 2012 | 2720 | 2022 | 2010 | 1955 | 1914 | 1923 | 2025 |
| | Bending test | | | good | good | good | good | good | good | good | — |
| | Adhesion strength between substrate and coating layer | | | good | good | good | good | good | good | good | poor |

19

**Claims**

1. A coated electric wire comprising a flat electric wire substrate and a coating layer formed on an outer periphery of the flat electric wire substrate,
wherein the coating layer includes:

    a first layer formed of a liquid coating material composition (1) containing a polymer compound (1) having any one or both of an amide group and an imide group,
    a second layer formed of a liquid coating material composition (2) containing a polymer compound (2) having any one or both of an amide group and an imide group, and a fluorine-containing polymer compound (2), or of a powder coating material composition (2) containing a polymer compound (2) having any one or both of an amide group and an imide group, and a fluorine-containing polymer compound (2), and
    a third layer formed by extrusion of a fluorine-containing polymer compound (3).

2. The coated electric wire according to claim 1, wherein the polymer compound (1) or the polymer compound (2) is at least one selected from the group consisting of polyamideimide, polyetherimide, polyimide and thermoplastic polyimide.

3. The coated electric wire according to claim 1 or 2, wherein the fluorine-containing polymer compound (2) or the fluorine-containing polymer compound (3) is a perfluoro-based polymer compound.

4. The coated electric wire according to any one of claims 1 to 3, wherein the fluorine-containing polymer compound (2) or the fluorine-containing polymer compound (3) has a relative dielectric constant of 2.0 to 2.2.

5. The coated electric wire according to any one of claims 1 to 4, wherein the fluorine-containing polymer compound (3) has a melting point of 250 to 320°C.

6. The coated electric wire according to any one of claims 1 to 5, wherein a volume ratio between the polymer compound (2) and the fluorine-containing polymer compound (2) is 10/90 to 90/10.

7. The coated electric wire according to any one of claims 1 to 6, wherein a material forming the flat electric wire substrate is at least one selected from the group consisting of copper, copper alloy, aluminum and aluminum alloy.

8. The coated electric wire according to any one of claims 1 to 7, wherein the flat electric wire substrate has a surface roughness Sz in the range of 0.2 to 12 $\mu$m.

9. The coated electric wire according to any one of claims 1 to 8, wherein the coating layer has a thickness of 30 to 500 $\mu$m, and the coating layer has a relative dielectric constant of 2.1 to 2.8.

10. The coated electric wire according to any one of claims 1 to 9, wherein the third layer has a thickness of 50 to 300 $\mu$m.

11. The coated electric wire according to any one of claims 1 to 10, wherein a partial discharge inception voltage of the coating layer satisfies the following relational expression:

```
Partial discharge inception voltage (Vp) ≥ 7.2 × t + 880
```

    t: thickness of the coating layer ($\mu$m)

12. The coated electric wire according to any one of claims 1 to 11, wherein the fluorine-containing polymer compound (2) or the fluorine-containing polymer compound (3) has 5 to 1,000 functional groups per $10^6$ carbon atoms.

13. The coated electric wire according to any one of claims 1 to 11, wherein the fluorine-containing polymer compound (3) has 0 to 4 functional groups per $10^6$ carbon atoms.

14. The coated electric wire according to any one of claims 1 to 13, wherein the fluorine-containing polymer compound (3) has a melt flow rate (MFR) of 0.1 to 100 g/10 minutes.

**15.** the coated electric wire according to any one of claims 1 to 14, wherein the liquid coating material composition (2) has a viscosity of 10 to 10,000 (cP).

**16.** The coated electric wire according to any one of claims 1 to 15, wherein the powder coating material composition (2) has an average particle size of 1 to 100 ($\mu$m).

**17.** The coated electric wire according to any one of claims 1 to 16, wherein the first layer is formed on the outer periphery of the flat electric wire substrate, the second layer is formed on an outer periphery of the first layer, and the third layer is formed on an outer periphery of the second layer.

**18.** A method for producing a coated electric wire, which is for producing the coated electric wire according to any one of claims 1 to 17, comprising:

applying a liquid coating material composition (1) to an outer periphery of the flat electric wire substrate to form a first layer,
applying a liquid coating material composition (2) or a powder coating material composition (2) to an outer periphery of the first layer to form a second layer, and
extruding a fluorine-containing polymer compound (3) to an outer periphery of the second layer to form a third layer by extrusion method.

**19.** A motor comprising the coated electric wire according to any one of claims 1 to 17.

## INTERNATIONAL SEARCH REPORT

International application No.

**PCT/JP2023/028332**

| A. | CLASSIFICATION OF SUBJECT MATTER |
|---|---|

*H01B 7/02*(2006.01)i; *H01B 7/18*(2006.01)i; *H01B 13/16*(2006.01)i; *H01B 13/24*(2006.01)i; *H01F 5/06*(2006.01)i
FI:   H01B7/02 C; H01B13/16 B; H01B13/16 C; H01B13/16 Z; H01B7/18 B; H01B13/24 Z; H01F5/06 Q

According to International Patent Classification (IPC) or to both national classification and IPC

| B. | FIELDS SEARCHED |
|---|---|

Minimum documentation searched (classification system followed by classification symbols)

H01B7/02; H01B7/18; H01B13/16; H01B13/24; H01F5/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2019/102989 A1 (MITSUBISHI MATERIALS CORP) 31 May 2019 (2019-05-31) paragraphs [0025]-[0085], fig. 1-2 | 1-19 |
| A | JP 63-29412 A (SUMITOMO ELECTRIC IND LTD) 08 February 1988 (1988-02-08) p. 2, upper left column, line 15 to p. 4, table 1 | 1-19 |
| A | WO 2011/024809 A1 (DAIKIN IND LTD) 03 March 2011 (2011-03-03) paragraphs [0019]-[0145] | 1-19 |
| A | JP 11-191325 A (DAIICHI DENKO KK) 13 July 1999 (1999-07-13) paragraphs [0036], [0040], [0047], [0051] | 1-19 |

☐ Further documents are listed in the continuation of Box C.       ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 October 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/028332**

| Patent document cited in search report | | | Publication date (day/month/year) | Patent family member(s) | | | Publication date (day/month/year) |
|---|---|---|---|---|---|---|---|
| WO | 2019/102989 | A1 | 31 May 2019 | JP | 2019-96605 | A | |
| | | | | JP | 2019-96606 | A | |
| | | | | JP | 2023-9278 | A | |
| | | | | US | 2020/0399778 | A1 | |
| | | | | paragraphs [0040]-[0108], fig. 1-2 | | | |
| | | | | EP | 3716292 | A1 | |
| | | | | CN | 111357062 | A | |
| | | | | KR | 10-2020-0090157 | A | |
| JP | 63-29412 | A | 08 February 1988 | (Family: none) | | | |
| WO | 2011/024809 | A1 | 03 March 2011 | JP | 2011-71089 | A | |
| JP | 11-191325 | A | 13 July 1999 | (Family: none) | | | |

Form PCT/ISA/210 (patent family annex) (January 2015)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011024809 A
- JP 2006152234 A
- WO 2017122743 A